# EUROPÄISCHE PATENTSCHRIFT

(11) **EP 0 347 631 B1**
(45) Veröffentlichungstag und Bekanntmachung des Hinweises auf die Patenterteilung: **25.08.1993**
(21) Anmeldenummer: 89110000.0
(22) Anmeldetag: 02.06.1989
(51) Int. Cl.: B23Q 11/00, B23D 59/00, B23D 49/16, B27B 19/09

(54) **Stichsäge mit Absaugung**
Jig saw extracting dust
Scie sauteuse munie d'une aspiration des copeaux

(30) Priorität: 18.06.1988 DE 3820752
(43) Veröffentlichungstag der Anmeldung: 27.12.1989
(73) Patentinhaber: Karl M. Reich, Maschinenfabrik GmbH, 72607 Nürtingen (DE)
(72) Erfinder: Schlücker, Niels, D-7440 Nürtingen-Neckarhausen (DE); Meyer, Klaus, D-7440 Nürtingen (DE); Raichle, Dieter, D-7440 Nürtingen-Reudern (DE)

(56) Entgegenhaltungen:
- EP-A- 0 073 693
- FR-A- 2 327 845
- US-A- 4 233 738

## Beschreibung

Die Erfindung betrifft eine Stichsäge mit Absaugung gemäß Oberbegriff von Anspruch 1.

Bei einer bekannten Stichsäge gemäß FR-A-2 327 845, die mit ihrer Grundplatte auf dem Werkstück aufsetzbar ist, ist zur Absaugung der Sägespäne ein oberhalb der Grundplatte angeordneter Absaugkanal vorgesehen. Das Stichsägeblatt ist nach vorne durch eine mit dem Gehäuse verbundene, einteilige Abdeckhaube umschlossen, die sich bis zur Grundplatte erstreckt.

Nachteilig bei dieser bekannten Stichsäge ist die Notwendigkeit, daß bei Sägearbeiten mit Absaugung die Grundplatte ausgetauscht werden muß. Dies ist umständlich und zeitraubend, die einteilige Abdeckhaube erlaubt es dazuhin nicht, das Gehäuse gegen die Grundplatte zur Ausführung von Schrägschnitten zu schwenken. Mit der bekannten Ausführung sind also nur senkrechte Sägeschnitte möglich.

Aufgabe der vorliegenden Erfindung ist daher die Schaffung einer Stichsäge der eingangs genannten Art, die für die Absaugung umgerüstet werden kann und mit der dabei auch schräge Sägeschnitte möglich sind.

Diese Aufgabe wird erfindungsgemäß durch die Merkmale des Anspruchs 1 gelöst.

Bei der erfindungsgemäßen Absaugeinrichtung ist es möglich, Stichsägen ohne Absaugung auf einfache Art und Weise durch Aufstecken des Absaugschuhs von unten auf die Grundplatte für Arbeiten mit Absaugung umzurüsten.

Der Absaugschuh kann vorteilhafterweise aus Kunststoff ausgeführt werden, damit ergibt sich der weitere Vorteil, daß die Oberfläche des Werkstücks beim Aufsetzen der Stichsäge geschont wird.

Zur sicheren und wirkungsvollen Absaugung ist das Stichsägeblatt nach vorne durch eine zweiteilige Abdeckhaube umschlossen, deren beide Teile so ineinander eingreifen, daß sich das Gehäuse in bekannter Weise gegenüber der Grundplatte verschwenken läßt, so daß auch schräge Sägeschnitte mit Absaugung möglich sind.

Da der Absaugschuh die Grundplatte nach hinten überragt, kann er vorteilhafterweise mit Befestigungselementen versehen sein, in die bereitzuhaltende Stichsägeblätter verschiedener Ausführungsformen einsteckbar sind.

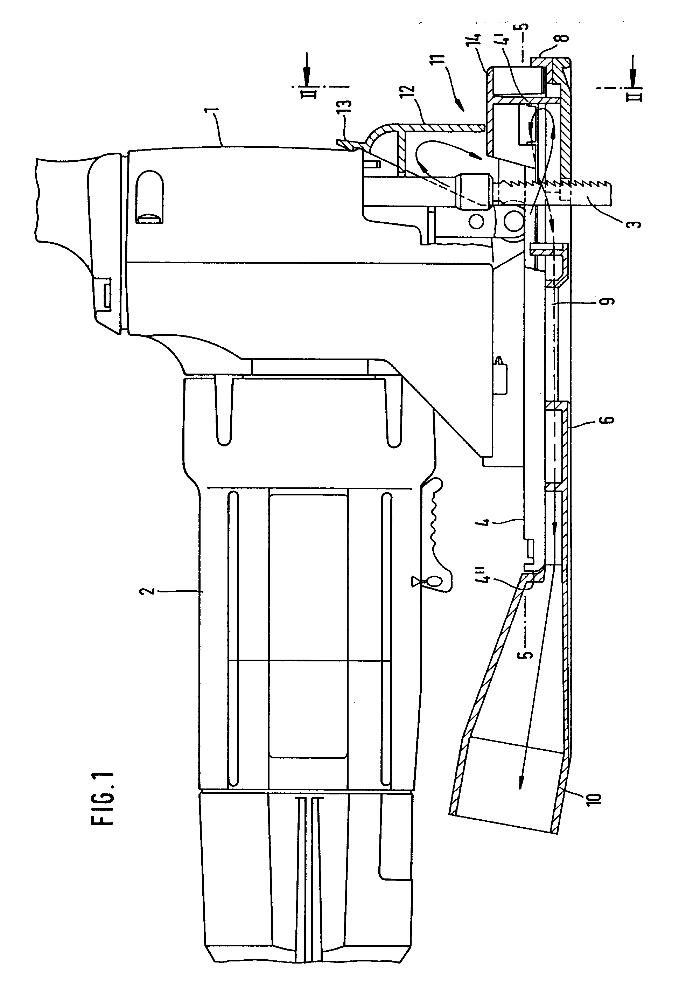

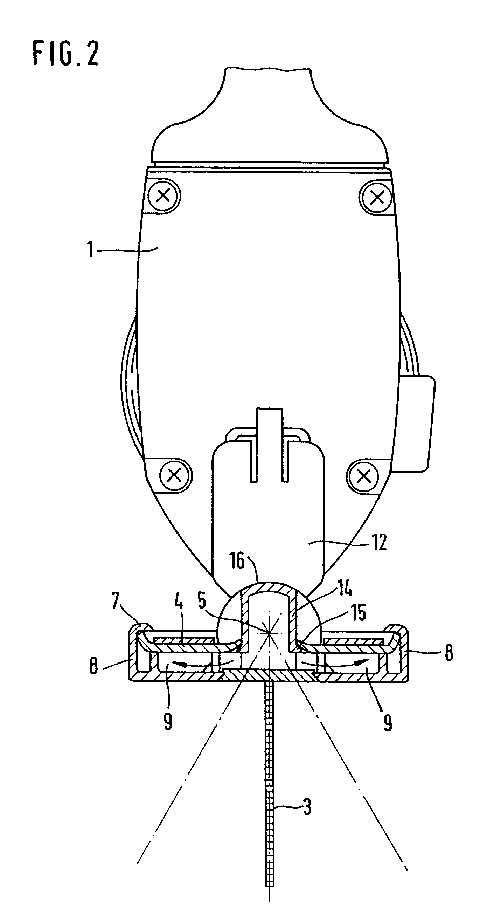

Im folgenden ist ein Ausführungsbeispiel der Erfindung unter Bezugnahme auf die Zeichnungen näher beschrieben:
Es zeigen:
- Fig. 1: Stichsäge von der Seite,
Absaugschuh und Abdeckhaube geschnitten
- Fig. 2: Schnitt nach Linie II - II in Fig. 1
- Fig. 3: Absaugschuh von oben
Bei der in Fig. 1 gezeigten Stichsäge ist in einem Gehäuse 1 ein von einem Elektromotor 2 antreibbares Stichsägeblatt 3 hin- und her-verschiebbar gelagert. Das Gehäuse 1 ist in bekannter Weise auf einer Grundplatte 4 so angeordnet, daß es zur Ausführung von schrägen Sägeschnitten um eine zur Vorschubrichtung parallelen Schwenkachse 5-5 schwenkbar ist. (Siehe auch Fig. 2).

Zur Verbindung der Angriffstelle des Stichsägeblatts 3 mit einem nicht dargestellten Absauggerät läßt sich auf die Grundplatte 4 von unten ein Absaugschuh 6 aufstecken, der aus Kunststoff hergestellt ist und dessen elastische Pratzen 7 die Grundplatte 4 von oben umgreifen.

Der Absaugschuh 6 ist als flacher Rahmen ausgeführt, dessen Außenwände 8 an drei Seiten an der Grundplatte 4 anliegen.

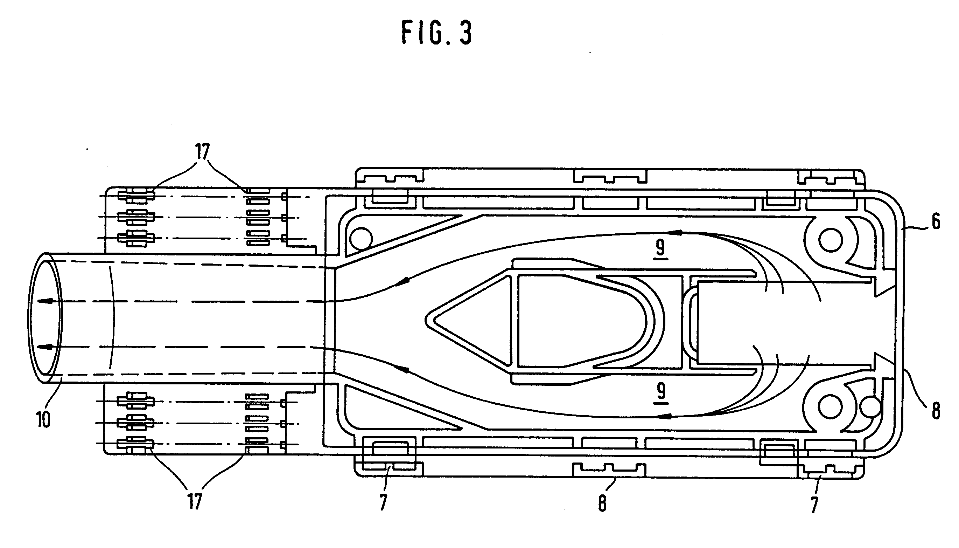

Wie auch Fig. 3 zeigt, weist der Absaugschuh 6 nach oben offene Luftführungskanäle 9 auf, die sich nahezu bis zur Vorderkante 4′ der Grundplatte 4 erstrecken und gegen das Stichsägeblatt 3 geöffnet sind. Nach Hinterkante 4˝ von Grundplatte 4 münden die Luftführungskanäle 9 in einen mit dem Absaugschuh 6 verbundenen Absaugstutzen 10, mit dem ein nicht dargestellter Schlauch des Absauggeräts verbindbar ist.

Das Stichsägeblatt 3 wird nach vorne von einer zweiteiligen Abdeckhaube 11 umschlossen, deren Oberteil 12 mit einer elastischen Klammer 13 auf das Gehäuse 1 und deren Unterteil 14 ebenfalls mit elastischen Klammern 15 auf die Grundplatte 4 aufsteckbar ist. Oberteil 12 und Unterteil 14 berühren sich an ihrer Trennstelle mit einer kreisbogenförmigen Außenkontur 16, die konzentrisch zur Schwenkachse 5 verläuft. Damit ist es möglich, das Gehäuse 1 gegen die Grundplatte 4 zu verschwenken, wobei die volle Absaugleistung erhalten bleibt.

An der nach oben gerichteten Fläche von Absaugschuh 6, die die Grundplatte 4 nach hinten überragt, können neben dem Absaugstutzen 10 zweckmäßigerweise Befestigungselemente 17 in Form von elastischen Klammern vorgesehen sein, in denen sich bereitzuhaltende Stichsägeblätter unterbringen lassen.

## Patentansprüche

1. Stichsäge mit Absaugung mit einem Gehäuse (1), in dem das motorisch antreibbare Stichsägeblatt (3) hin- und herbewegbar gelagert ist, mit einer Grundplatte (4), an der ein Absaugkanal (9) angeordnet ist und mit einer am Gehäuse (1) angeordneten, das Stichsägeblatt (3) nach vorne umschließenden Abdeckhauhe (11), **dadurch gekennzeichnet,** daß unterhalb der Grundplatte (4) ein flacher Absaugschuh (6) abnehmbar angeordnet ist, dessen Absaugkanäle (9) sich unter der Grundplatte (4) bis zu deren Hinterkante (4") erstrecken und in einen mit dem Absaugschuh (6) verbundenen Absaugstutzen (10) münden und daß die Abdeckhaube (11) zweiteilig ausgeführt ist, wobei ein Oberteil (12) mit dem Gehäuse (1) und ein Unterteil (14) mit der Grundplatte (4) lösbar verbunden ist, wobei die beiden Teile (12, 14) so ineinander eingreifen, daß sich das Gehäuse (1) gegenüber der Grundplatte (4) verschwenken läßt.

2. Stichsäge nach Anspruch 1, **dadurch gekennzeichnet,** daß das Unterteil (14) eine im wesentlichen halbkreisförmige, zur Schwenkachse (5-5) konzentrische Außenkontur (16) aufweist, die in eine kreisförmige Aussparung des Oberteils (12) eingreift.

3. Stichsäge nach einem der Ansprüche 1 oder 2, **dadurch gekennzeichnet,** daß am hinteren, die Grundplatte (4) überragenden Ende des Absaugschuhs (6) Befestigungselemente (17) für Stichsägeblätter (3) vorgesehen sind.

## Claims

1. A jigsaw with extractor, having a housing (1) in which the motor-driven jigsaw blade (3) is mounted to permit backward and forward movement, having a sole plate (4) on which is disposed an extractor duct (9), and having a cover hood (11) enclosing said jigsaw blade (3) at the front, **characterised in that** underneath said sole plate (4) is disposed a flat extractor shoe (6) whose extractor ducts (9) extend underneath said sole plate (4) up to the rear edge (4") thereof and open into an extractor piece (10) connected to said extractor shoe (6), and in that said cover hood (11) is designed in two sections, with a top section (12) being detachably connected to said housing and a bottom section (14) to said sole plate (4), said sections (12, 14) engaging in one another such that said housing (1) can be swivelled in relation to said sole plate (4).

2. A jigsaw according to Claim 1, **characterised in that** said bottom section (14) has a substantially semi-circular outer contour (16) concentric to the swivel axis (5-5) and engaging in a circular recess in said top section (12).

3. A jigsaw according to one of Claims 1, **characterised in that** fastening elements (17) for jigsaw blades (3) are provided at the rear end of said extractor shoe (6) extending beyond said sole plate (4).

## Revendications

1. Lame de scie à guichet avec aspiration avec un carter (1) dans lequel est logée la lame de scie à guichet (3) actionnée par un moteur, laquelle peut être déplacée dans un mouvement de va-et-vient, avec une plaque d'assise (4) sur laquelle est disposé un conduit d'aspiration (9) et avec un capot disposé sur le carter (1) et qui enserre la lame de scie à guichet (3) vers l'avant, **caractérisée en ce qu**'est disposé, sous la plaque d'assise (4) un sabot d'aspiration plat (6) amovible dont les conduits d'aspiration (9) s'étendent sous la plaque d'assise (4) jusqu'au bord arrière (4") de celle-ci et débouchent dans une tubulure d'aspiration (10) reliée au sabot d'aspiration (6) et en ce que le capot (11) est conçu en deux parties, une partie supérieure (12) étant relié de façon amovible avec le carter (1) et une partie inférieure (14) l'étant avec la plaque d'assise (4), les deux parties (12, 14) s'emboîtant l'une dans l'autre de telle manière que le carter (1) peut pivoter par rapport à la plaque d'assise (4).

2. Lame de scie à guichet selon la revendication n^{o} 1 **caractérisée en ce** que la partie inférieure (14) présente un contour extérieur (16) essentiellement en forme d'arc de cercle, concentrique par rapport à l'axe de pivotement (5-5), contour qui s'engage dans un évidement en forme de cercle de la partie supérieure (12).

3. Lame de scie à guichet selon l'une des revendications n^{o} 1 ou 2 **caractérisée en ce** que sont prévus des éléments de fixation (17) pour lames de scie à guichet (3) à l'extrémité arrière dépassant la plaque d'assise (4). (14) présente un contour extérieur (16) essentiellement en forme d'arc de cercle, concentrique par rapport à l'axe de pivotement (5-5), contour qui s'engage dans un évidement en forme de cercle de la partie supérieure (12).
